(19) Europäisches Patentamt
European Patent Office
Office européen des brevets

(11) **EP 2 649 769 B1**

(12) **FASCICULE DE BREVET EUROPEEN**

(45) Date de publication et mention
de la délivrance du brevet:
**15.11.2017   Bulletin 2017/46**

(21) Numéro de dépôt: **11802313.4**

(22) Date de dépôt: **05.12.2011**

(51) Int Cl.:
*G09B 5/02* *(2006.01)*          *G06F 3/14* *(2006.01)*
*G06N 99/00* *(2010.01)*          *G09B 19/00* *(2006.01)*
*H04L 29/06* *(2006.01)*

(86) Numéro de dépôt international:
**PCT/EP2011/071770**

(87) Numéro de publication internationale:
**WO 2012/076477 (14.06.2012 Gazette 2012/24)**

(54) **PROCÉDÉ DE PARTAGE D'APPRENTISSAGE PARTIEL D'UNE APPLICATION LOGICIELLE**

VERFAHREN FÜR VERTEITES LEHREN VON EINEM SOFWAREANWENDUNG

METHOD OF SHARED LEARNIG OF A SOFTWARE APPLICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.12.2010  FR 1060125**

(43) Date de publication de la demande:
**16.10.2013   Bulletin 2013/42**

(73) Titulaire: **Mezzonomy
31700 Blagnac (FR)**

(72) Inventeur: **GRADIT, Pierre
F-31700 Blagnac (FR)**

(74) Mandataire: **Ipside
6, Impasse Michel Labrousse
31100 Toulouse (FR)**

(56) Documents cités:
**US-A1- 2006 002 315     US-A1- 2007 294 626
US-A1- 2010 257 450**

## Description

La présente invention est relative au domaine des procédés d'apprentissage. Elle concerne plus spécifiquement un procédé de partage par une machine dite secondaire d'une région interactive d'une application prédéterminée, exécutée sur une machine dite primaire à laquelle elle est reliée par un réseau physique de communication.
Les documents US2010/0257450 et US2007/0294626 décrivent des systèmes permettant le partage d' applications entre machines interconnectées via un réseau.

## Préambule

On connait déjà dans le domaine du partage d'applications la technique de bureau à distance ou d'« export d'affichage » ("export display"). Dans cette technique, un utilisateur d'une machine secondaire se connecte à une machine primaire, et dispose sur cette machine primaire d'un bureau virtuel, calculé sur la machine primaire. Ce bureau comporte des applications exécutées sur la machine primaire, dont la visualisation est déportée vers la machine secondaire. Dans cette technique d'exportation d'affichage, l'ensemble de chaque application primaire considérée est accessible à l'utilisateur de la machine secondaire.
De même, on connait des techniques de prise de contrôle à distance d'une machine par une autre machine, permettant typiquement des opérations de maintenance d'applications ou de configurations de système (Telnet, SSH, ...). Ici, l'utilisateur distant qui prend le contrôle de la machine primaire accède à la totalité des applications de la machine, ainsi qu'à tous ses fichiers. Les deux techniques sont d'usage conjoint, par exemple la norme RFC1096 décrit comment réaliser une exportation d'affichage depuis un Telnet.
Ces deux techniques ne permettent pas de conserver la confidentialité d'une partie d'une application, tout en donnant l'accès à une autre partie de ladite application. Dans le cas ou l'application a été développée par un utilisateur primaire à travers une longue séquence d'actions (ce qui est par exemple le cas lors de la création d'un feuillet complexe sur un tableur), l'ensemble des formules et macros composant ce feuillet complexe devient accessible à l'utilisateur distant, alors même qu'il pourrait être souhaitable de donner accès seulement à son usage.

## Objectifs de l'invention

Un but de l'invention est de permettre le partage à distance d'une partie d'une application, sans donner pour autant un accès complet à l'application elle-même.

## Exposé de l'invention

La présente invention est obtenue par l'objet des revendications indépendantes. Des modes de réalisation avantageux sont définis dans les revendications dépendantes. D'autres exemples sont fournis pour faciliter la compréhension de l'invention.
Le procédé de partage d'apprentissage comporte des étapes suivantes :

100 - apprentissage par l'utilisateur primaire d'un comportement au sein de l'application considérée, étape dans laquelle une fonction de comportement locale $g_c$ sur la machine primaire est définie par la réaction à une séquence d'actions quelconque $x1$ dont les éléments sont réalisés à l'intérieur d'une région interactive de l'application, cette séquence d'actions x1 menant au comportement $g_c$ étant appelée **apprentissage du comportement** $g_c$,
200 - définition par un utilisateur de la machine primaire d'un domaine d'action $C$ à partager, ledit domaine d'action $C$ étant créé au sein de la région interactive et ne couvrant pas l'ensemble de ladite région interactive,
300 - exportation par l'utilisateur primaire du domaine d'action $C$ à partager de la machine primaire vers au moins une machine secondaire,
400 - reproduction sur une machine secondaire d'un reflet interactif $R_C$ du domaine d'action $C$, ledit reflet interactif $R_C$ présentant **un comportement identique** à celui du domaine d'action $C$ défini et exporté, c'est-à-dire que des entrées identiques dans ce domaine d'action $C$, dites stimulations, produisent des résultats identiques,

caractérisé en ce que cette reproduction étant telle que, si plusieurs utilisateurs secondaires (21, 31, 41) travaillent simultanément sur des reflets $R_{2C}$, $R_{3C}$, $R_{4C}$ la machine primaire (10) calcule le résultat de la fonction de comportement $g_c$ appliquée à ces actions $y_2$, $y_3$, $y_4$ et renvoie à chaque machine secondaire (20, 30, 40) les primitives graphiques résultantes sur le reflet $R_{2C}$, $R_{3C}$, $R_{4C}$ présent sur ces machines secondaires (20, 30, 40), ces reflets $R_{2C}$, $R_{3C}$, $R_{4C}$ étant ainsi indépendants et éventuellement différents les uns des autres, chaque utilisateur de l'application partagée ne voyant que le résultat de ses propres simulations et non celui des autres. On entend ici **région interactive** au sens du W3C. Une région interactive est alors définie comme une région géométrique produisant des effets pour toutes les opérations interactives de curseur et de souris informatique : notamment désignation ("picking" en langue anglaise), survol ("mouse-over"), glisser-déposer ("drag and drop"). Par défaut, les primitives graphiques dessinées pour l'objet définissent la région interactive.

Pour les primitives de zone remplie ("filled area"), la région interactive comprend: le bord, si la visibilité de bord est sur «on»; l'intérieur, si le style intérieur est autre que «vide» ou «creux», et la limite, pour le style intérieur «creux». Pour tous les types de **primitives graphiques,** les primitives graphiques dessinées excluent celles qui sont totalement transparentes (donc un objet totalement transparent est équivalent à un objet vide, aux fins de la définition de région interactive).

Selon une mise en oeuvre préférée, dans l'étape 200, l'utilisateur primaire définit visuellement, sur une interface de type écran, une frontière fermée définissant un domaine d'action C du procédé, au sein de la région interactive de l'application logicielle considérée, en cours d'exécution sur la machine primaire. Plus particulièrement, le domaine d'action C est défini par les **primitives graphiques** de présentation des données sur l'écran de visualisation pour former une région interactive incluse dans la région interactive de l'application considérée, en cours d'exécution sur la machine primaire.

Selon une mise en oeuvre avantageuse, dans l'étape 300, l'exportation du comportement $g_c$ est commandée par l'utilisateur primaire :

- en cliquant sur le domaine d'action $C$ pour le sélectionner, le fait de cliquer, à l'aide d'une interface de type souris, sur un domaine d'action $C$ préalablement défini, ayant pour résultat le placement de l'adresse du comportement $g_c$ dans le registre de ladite souris,
- en glissant à l'aide de la souris ce domaine d'action $C$ hors de l'application logicielle considérée, pour le déposer dans un message envoyé à un utilisateur secondaire travaillant sur une machine secondaire, ceci ayant pour résultat le transfert de l'adresse du comportement $g_c$ sur le support d'échange (15).

Dans ce cas, avantageusement, lorsque l'adresse du comportement $g_c$ a été transmise sur le réseau d'échange, elle est récupérée par l'utilisateur secondaire dans le registre d'une souris de la machine secondaire, puis déposée par l'utilisateur secondaire sur une application logicielle exécutée sur la machine secondaire.

Selon une mise en oeuvre préférée, dans l'étape 400, la reproduction d'un reflet interactif $R_C$ comporte, pour toute stimulation $y2$ du reflet interactif $R_C$ d'un domaine d'action $C$ par un utilisateur d'une machine secondaire, des sous-étapes suivantes :

401. transfert, par le réseau de communication, sur la machine primaire de la stimulation $y2$ du reflet interactif $R_C$, ladite stimulation étant réalisée sur la machine secondaire,

402. calcul par l'application sur la machine primaire, de la réponse à la stimulation $y2$ du reflet interactif $R_C$, dite réponse secondaire, c'est à dire que le calcul de la fonction de comportement du reflet $R_C$ du domaine d'action $C$ est réalisé sur la machine primaire,

403. transfert vers la machine secondaire de la réponse secondaire,

404. mise à jour du reflet interactif $R_C$ sur la machine secondaire.

Pour l'homme de l'art qui interpréterait ce procédé en termes d'entrées/sorties, il s'agirait d'étapes de :

- choix sur la machine secondaire par un utilisateur secondaire de valeurs d'entrée à exécuter par l'environnement de calcul,
- calcul par la machine primaire de la modification de l'environnement de calcul, consécutif au choix des valeurs à exécuter,
- transfert vers la machine secondaire du résultat et affichage dans l'environnement reflet.

Plus particulièrement, dans la sous-étape 402, la réponse secondaire est définie par les éléments graphiques modifiant la visualisation du reflet interactif $R_C$ du domaine d'action $C$.

Selon une mise en oeuvre préférée pour l'étape 100, l'apprentissage peut être transmis à la machine primaire sans références alphanumériques servant de variable. Cette absence garantit l'absence, dans le reflet interactif secondaire, de telles références prenant leur sens dans le contexte primaire et pouvant en être dépourvu dans le contexte secondaire. Ces références alphanumériques servant de variables sont remplacées dans la mise en oeuvre préférée pour l'étape 100 par des localisations graphiques sur le domaine d'action C de la région interactive.

## Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :

Figure 1 : un schéma de principe des éléments impliqués dans le procédé,
Figure 2 : un logigramme des étapes du procédé,
Figure 3 : une illustration d'interface d'une application dotée d'une région interactive résultat d'un apprentissage,
Figure 4 : une illustration pour le même exemple que la figure 3, de la définition d'un domaine d'action du procédé,
Figure 5 : un schéma de principe illustrant le procédé appliqué sur un domaine,
Figure 6 : les étapes principales du procédé d'exportation d'un domaine par usage d'un support d'échange,

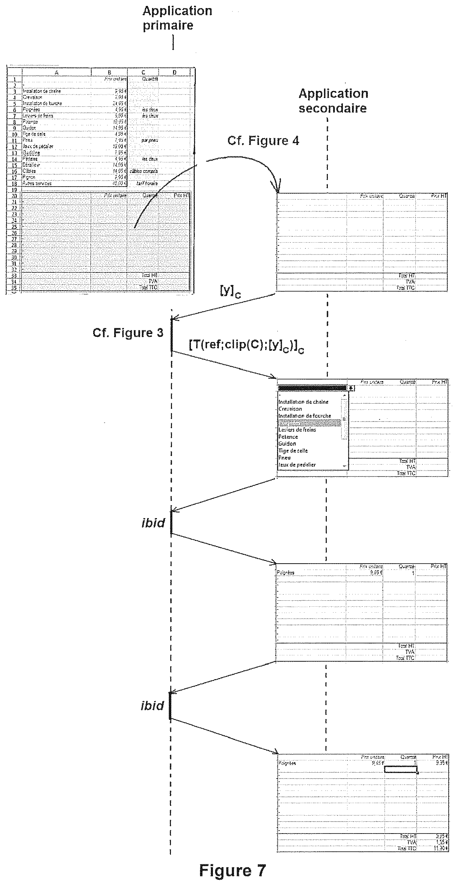

Figure 7 : les étapes de la réalisation distante de l'apprentissage,
Figure 8 : un exemple de comportement hors-contexte du reflet d'un tableur générique,
Figure 9 : un procédé secondaire sans comportement hors-contexte.

## Description détaillée d'un mode de réalisation de l'invention

L'invention est un procédé de partage d'apprentissage destiné à être mis en oeuvre sous forme de logiciel sur des machines informatiques de type micro-ordinateur (ordinateur personnel) ou ordinateur central ("main frame"), connu en soi.

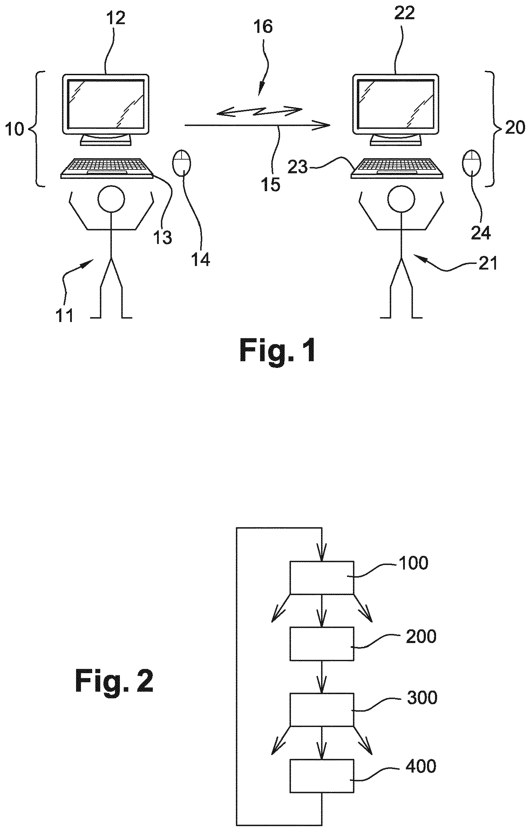

Dans le mode de mise en oeuvre décrit ici à titre d'exemple non limitatif (figure 1), une machine informatique dite **machine primaire** 10 est reliée, par un réseau physique 16 supportant un protocole de communication 15 de type connu en soi, par exemple l'« internet protocol » (IP), à une ou plusieurs machines informatiques dites **machines secondaires** 20, 30, 40... Un utilisateur dit **utilisateur primaire** 11 met en oeuvre le procédé sur la machine primaire 10, et un ou plusieurs utilisateurs dits **utilisateurs** secondaires 21, 31, 41 mettent en oeuvre le procédé sur des machines secondaires 20, 30, 40...

Chacune des machines primaire et secondaires (10, 20, 30, 40, etc.) mettant en oeuvre le procédé de partage, exécute des éléments logiciels réalisant les étapes dudit procédé de partage.

Le procédé de partage d'apprentissage comporte plusieurs étapes principales (figure 2) :

- 100 : apprentissage d'un comportement,
- 200 : définition d'un domaine
- 300 : exportation d'un domaine,
- 400 : utilisation du domaine,

## Étape 100 : apprentissage d'un comportement

On considère une application logicielle exécutée sur la machine primaire 10. Cette application logicielle communique avec un utilisateur primaire 11 à travers une interface, ici supposée comporter un afficheur graphique de type écran 12, ainsi qu'un clavier 13 et une souris informatique 14. Dans une variante, l'écran d'affichage 12, le clavier 13 et la souris informatique 14 peuvent être avantageusement remplacé par un seul écran tactile ("Touchscreen"). Ces éléments sont connus en soi et sortent en tant que tels du cadre de la présente invention.

On note alors *x1* une séquence des interactions de l'utilisateur primaire 11 de l'interface. Cette séquence d'actions *x1* comporte notamment des éléments tels que : mouvement de la souris 14 se traduisant, de façon connue, par un mouvement du pointeur sur l'écran 12, appui / relâchement sur un bouton de la souris 14 ou du clavier 13 etc. Ces éléments composant la séquence d'actions *x1* sont des entrées d'un processeur de la machine primaire 10. Ces actions ont lieu au sein d'une région interactive de l'application.

Le **comportement de la région** interactive peut être décrit par l'équation suivante :

$$d, u = f(x1) \qquad \textbf{(Eq. 1)}$$

dans laquelle :

- $d$ désigne le dessin de l'interface (c'est-à-dire une séquence d'éléments graphiques, rangés dans l'ordre du peintre, c'est-à-dire dans l'ordre où ils ont été déposés sur l'écran 12),
- $u$ est le registre de la souris 14 (glisser / déposer ...),
- x1 est une séquence d'actions
- $f$ est une **fonction déterministe de comportement** liée à l'application logicielle considérée et en cours d'exécution sur la machine primaire 10,

Il est important de noter que nous nous intéressons aux fonctions *f* au comportement déterministe, capable d'apprentissage, c'est à dire dont le comportement ultérieur est potentiellement influencé par les actions réalisées antérieurement.

Soit alors *f* une première fonction de comportement, et *x1* une séquence d'actions sur la machine primaire 10. Toute séquence d'actions *y* suivant la première séquence d'actions *x1* définit une seconde fonction déterministe de comportement $g_{X1}$ par l'équation :

$$g_{X1}(y) = f(x1; y)$$

dans laquelle *x1; y* définit la concaténation des séquences *x1* et *y*.

Toute séquence d'interactions peut-être en effet perçue comme point de départ d'un comportement pour une séquence d'opération ultérieure. Que la seconde fonction déterministe de comportement $g_{X1}$ soit significativement différente de *f* procède du caractère de capacité d'apprentissage de *f*. L'exemple ci-dessous détaille un apprentissage : un tableur est utilisé pour produire un devis de services pour un détaillant de cycles.

A titre d'exemple non limitatif d'application du procédé de partage, on considère comme application logicielle, exécutée sur la machine primaire 10, un tableur générique *T*, qui est une fonction de comportement déterministe, d'usage courant par le grand public :

$$T = <<le\ tableur\ générique>>$$

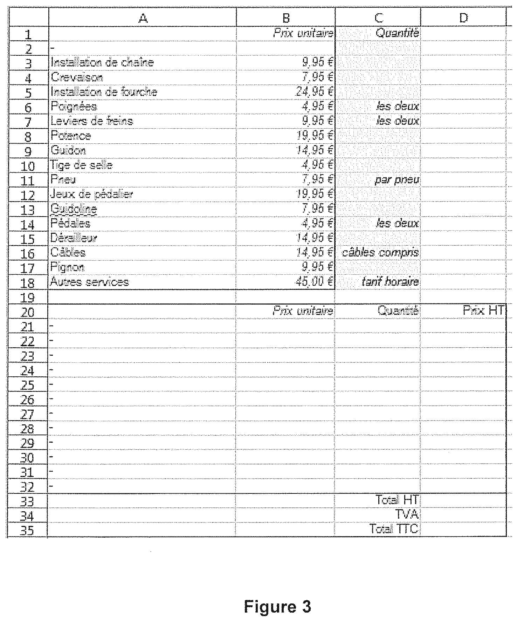

Après une séquence ref comportant un grand nombre de pressions de touches sur le clavier 13 et de déplacements de la souris 14, l'utilisateur primaire 11 a construit, ainsi qu'illustré sur la figure 3, une région interactive dotée d'un comportement adéquat pour générer un devis de services pour un détaillant de cycles.

**Étape 200 : définition d'un domaine**

Dans le procédé de partage d'apprentissage décrit ici à titre d'exemple non limitatif, on définit visuellement, sur l'écran 12 ou tout interface de restitution des données, telles que calculées par l'application logicielle en cours d'exécution sur la machine primaire 10, des frontières fermées (par exemple rectangle, bulles, etc.) définissant un **domaine d'action** du procédé, au sein de l'application logicielle considérée. Ce domaine d'action est appelé **clip** et noté *C* pour la suite de la description.

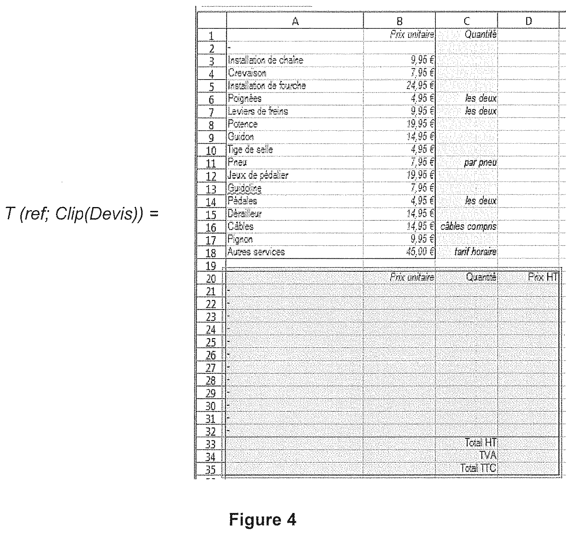

Dans l'exemple donné ici à titre explicatif, l'application considérée est une feuille de calcul dédié à l'établissement d'un devis de service pour un marchand de cycle. Dans une cellule de cette feuille de calcul, ici dite cellule de fonction, l'utilisateur primaire 11 a inscrit une fonction dont le résultat dépend du contenu d'autres cellules de la feuille de calcul, ici dites cellules de données. Le calcul et l'affichage du résultat de calcul de cette fonction selon le contenu des cellules de données forment une fonction de comportement déduite de *T*. Dans la figure 4, la partie inférieure de la feuille de calcul est identifiée comme étant le domaine d'action *C* du procédé.

L'utilisateur primaire 11 définit un domaine d'action *C* encadrant ces diverses cellules, ici situées au bas de la feuille de calcul, ce domaine d'action étant mis en évidence en grisé sur la figure 4. Cette définition de domaine d'action *C* est, par exemple, réalisée par un mouvement de cliqué, maintenu et tiré avec la souris 14, transcrit sur l'écran 12 sous forme de rectangle dessiné autour des cellules visées par le pointeur. Les éléments qui vont définir le domaine d'action *C* comprennent toutes les primitives graphiques de présentation des données sur l'écran de visualisation 12 pour former une région interactive.

Dans la définition du domaine d'action *C* telle que réalisée par le procédé ci-dessus, le domaine d'action *C* ainsi défini reste mis en évidence pour l'utilisateur primaire 11, par exemple par apposition d'un fond bleuté sur toute la surface dudit domaine d'action.

Ce domaine d'action *C* définit alors une fonction de comportement locale $g_c$ sur la machine primaire 10 par la réaction à une séquence d'actions quelconque dont les éléments sont réalisés à l'intérieur du domaine d'action. Cette fonction de comportement locale $g_c$ peut être décrite par l'équation :

$$g_c\ (y) = [f(x1; clip(C); [y]_C)]_C \qquad \textbf{(Eq. 2)}$$

dans laquelle *y* est une séquence d'action quelconque,

et *x1;clip(C);y* définit la concaténation des séquences *x1, clip(C)* et *y*.

et *[_]$_C$* définit la réduction du domaine graphique à C. *[y]$_C$* est une séquence d'action quelconque interne au domaine d'action C, c'est-à-dire dont tous les éléments ont lieu au sein du domaine d'action C,

et *g$_c$*. la fonction de comportement locale au domaine C. *g$_c$*. est appelée **comportement du domaine C,** elle est calculée sur la machine primaire 10

et *x1* la séquence d'actions menant au comportement *g$_c$*. La séquence: *x1* est appelée **apprentissage** du comportement *g$_c$*.

On comprend que la définition d'un domaine d'action C est reproduite au début de chaque mise en oeuvre du procédé de définition d'un nouveau comportement. En revanche, selon les objectifs de l'utilisateur primaire 11, la séquence d'apprentissage *x1* d'actions antérieures (définie à l'étape 100) à la définition du domaine C, et consécutivement du comportement *g$_c$*, peut différer d'un utilisateur à l'autre de la machine primaire 10 ou pour un même utilisateur primaire 10.

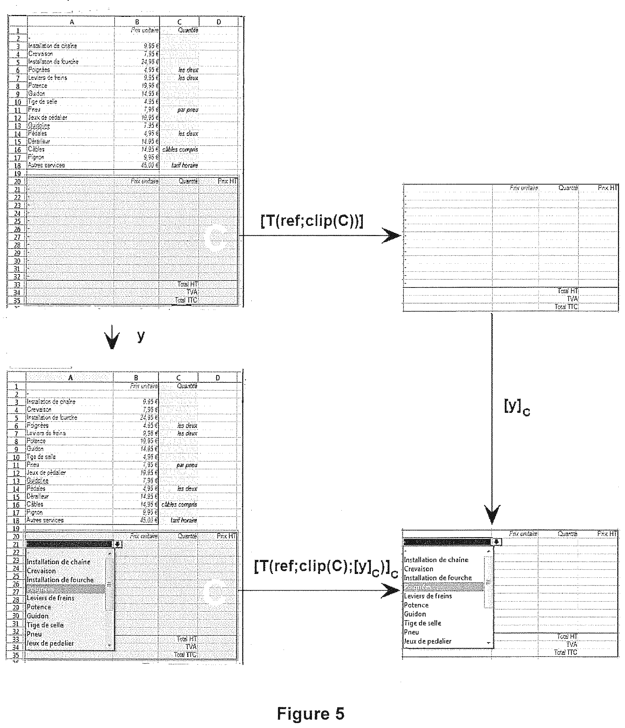

Pour l'exemple déjà cité, la figure 5 détaille le procédé de définition d'un domaine d'action :

$$Devis(y) = [T(ref;\ clip(C);[y]_C)]_C \qquad \textbf{(Eq. 3)}$$

dans laquelle *y* est une séquence d'action quelconque - usage ou apprentissage supplémentaire.

et *ref* la séquence d'opération (ou apprentissage) permettant d'apprendre à la fonction *T* les éléments nécessaire pour représenter un devis de service d'un détaillant de cycle.

et *devis* la fonction de comportement permettant de représenter un devis de service d'un détaillant de cycle.

### Étape 300 : exportation d'un domaine

On appelle **exportation du domaine** le transfert des éléments définissant le domaine d'action *C* vers une machine secondaire 20, a priori distante de la machine primaire 10 sur laquelle est exécutée l'application logicielle considérée.

Le fait de cliquer, à l'aide de la souris 14, sur un domaine d'action *C* préalablement défini, a pour résultat connu le placement de l'adresse du comportement *g$_c$* dans le registre de la souris 14. Cette adresse du comportement *g$_c$* peut alors être échangée avec une machine secondaire 20 par tout moyen télématique existant, utilisé comme **support d'échange** 15 utilisant le **réseau physique** 16.

L'exportation du comportement *g$_c$* est commandée par l'utilisateur primaire 11 en cliquant sur le domaine d'action *C* défini au préalable pour le sélectionner, en glissant ce domaine d'action *C* hors de l'application logicielle, pour le déposer par exemple dans un mail envoyé à un utilisateur secondaire 21 travaillant sur une machine secondaire 20. Ceci a pour résultat le transfert de l'adresse du comportement *g$_c$* sur le support d'échange 15.

Une fois transmise au registre d'une souris 24 d'une machine secondaire 20, cette adresse peut être déposée par l'utilisateur secondaire 21 sur une autre application, compatible avec le procédé décrit ici. On appelle application compatible avec le procédé de partage d'apprentissage décrit dans la présente demande, une application telle que le dépôt de l'adresse génère le comportement défini au point suivant.

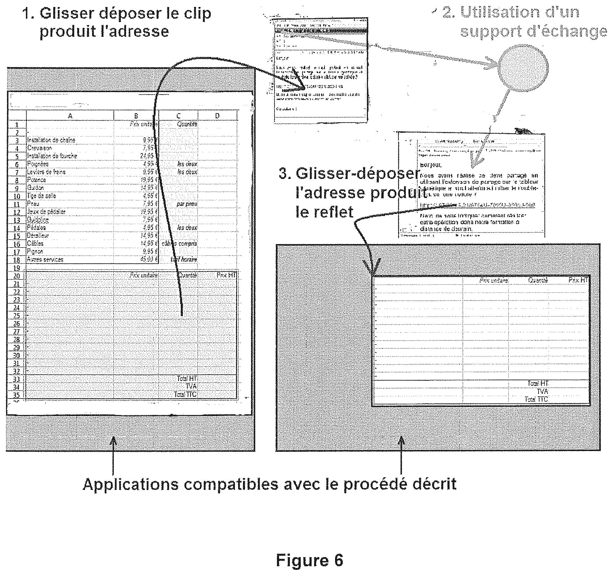

La figure 6 illustre ces étapes de l'exportation du domaine d'action *C* correspondant au devis de service pour le marchand de cycle, à travers une application de messagerie standard utilisée comme support d'échange 15.

### Étape 400 : utilisation du domaine

Le dépôt de l'adresse du comportement *g$_c$* sur une application compatible avec le procédé de partage d'apprentissage décrit dans la présente demande, conduit à l'apparition, sur l'écran de visualisation 22 de la machine secondaire 20, d'un **reflet** $R_{2C}$ du domaine d'action *C,* c'est-à-dire d'un domaine visuellement similaire au domaine d'action *C,* et dont la fonction de comportement est la fonction *g$_c$*.

Un aspect cardinal du procédé de partage d'apprentissage, décrit dans la présente demande, est que le calcul de la fonction de comportement *g$_c$* du reflet $R_{2C}$ du domaine d'action *C* est réalisé sur la machine primaire 10; lieu de la définition initiale du domaine d'action *C*.

Pour cela, la machine secondaire 20, qui est dite **détentrice du reflet** $R_{2C}$ du domaine d'action *C,* transmet vers la machine primaire 10 toutes les actions *y2* réalisées par l'utilisateur secondaire 21 dans le domaine $R_{2C}$. Ces actions *y2* sont définies par le déplacement du curseur associé à la souris 24 et par les éléments alphanumériques entrés par pression des touches sur le clavier 23 par l'utilisateur secondaire 21.

La machine primaire 10 calcule le comportement $g_c$ associé à ces actions $y2$, et renvoie vers la machine secondaire 20 les primitives graphiques modifiant la visualisation du domaine d'action $C$, consécutifs à ces actions $y2$ de l'utilisateur secondaire 21. Ces primitives graphiques sont transférées à la machine secondaire 20 à travers le réseau physique 16, et affichés dans une mise à jour du reflet $R_{2C}$ du domaine d'action $C$ sur l'écran 22 de la machine secondaire 20.

Cette procédure assure la confidentialité de l'apprentissage $x1$ au domaine d'action $C$, c'est-à-dire de la séquence d'actions $x1$. En effet, l'utilisateur secondaire 21 dispose d'un moyen d'opérer des actions $y2$ au sein du domaine d'action $C$, sans pour autant accéder à l'application logicielle elle-même, ou à la définition effective de la fonction de comportement $g_c$, et sans accéder en particulier à la séquence d'actions $x1$ ni à aucune représentation de ces actions autre que le comportement résultant.

En outre, comme le domaine d'action $C$ est réduit par rapport à l'application logicielle complète, l'utilisateur secondaire 21 ne dispose que d'une information partielle sur le comportement de l'application complète. Il ne voit sur son écran de visualisation 22 que ce que l'utilisateur primaire 11 a décidé de lui laisser voir, et n'accède qu'aux résultats de calcul sans accéder aux contributions sous-jacentes à ces résultats.

Dans l'exemple déjà utilisé plus haut, l'utilisateur secondaire 21 peut, dans le cadre d'une séquence d'actions $y2$, fournir de nouvelles données dans les cellules de données par l'intermédiaire de son clavier 23 et de sa souris 24, et obtenir sur son écran de visualisation 22 un résultat affiché dans la cellule de fonction, sans disposer cependant d'un accès à la fonction, dont la définition est contenue dans la cellule de fonction, stockée sur la machine primaire 10.

Au fur et à mesure des $n$ actions $y2$ de l'utilisateur secondaire 21 au sein du reflet $R_{2C}$ du domaine d'action $C$, la machine primaire 10 calcule le résultat de la fonction de comportement $g_c$ appliquée à ces actions $y2$ et renvoie à la machine secondaire 20 les primitives graphiques résultantes sur le reflet $R_{2C}$ présent sur ladite machine secondaire 20. Le processus se poursuit tant que le reflet $R_{2C}$ est actif, c'est-à-dire tant que l'utilisateur secondaire 20 émet des actions $y2$ dans le reflet $R_{2C}$.

De même, si plusieurs utilisateurs secondaires 21, 31, 41 travaillent simultanément sur des reflets $R_{2C}$, $R_{3C}$, $R_{4C}$, la machine primaire 10 calcule le résultat de la fonction de comportement $g_c$ appliquée à ces actions $y2, y3, y4$ et renvoie à chaque machine secondaire 20, 30, 40 les primitives graphiques résultantes sur le reflet $R_{2C}$, $R_{3C}$, $R_{4C}$ présent sur ces machines secondaires 20, 30, 40.

Dans l'exemple décrit ici à titre non limitatif, le nombre d'utilisateurs secondaires 21, 31, 41, c'est-à-dire de reflets du domaine d'action $C$, est quelconque a priori et n'est influencé que par le choix de l'utilisateur primaire 11.

Par ailleurs, l'ensemble des utilisateurs secondaires 21, 31, 41 est connu de l'utilisateur primaire 11. Il est alors possible de mutualiser les usages secondaires au niveau de la machine primaire 10. On appelle ici mutualisation le fait que, notamment, si deux utilisateurs secondaires 21, 31 suivent la même séquence d'actions, soit $ym = y2 = y3$, alors la machine primaire 10 calcule une seule fois la fonction de comportement appliquée à cette séquence d'actions $ym$, et retransmet les mêmes primitives graphique aux deux utilisateurs secondaires 21 et 31 concernés.

Le résultat de l'étape 400 peut être un élément de l'étape 100 d'un autre procédé de partage d'apprentissage.

**Avantages du procédé**

Le procédé de partage d'apprentissage tel qu'il a été décrit permet de rendre une application logicielle partageable par plusieurs machines secondaires dans son comportement, sans donner accès à l'application elle-même, ce qui garantit une bonne confidentialité des développements ayant conduit à la création de cette application, et empêche également sa copie illicite par un utilisateur secondaire peu scrupuleux.

Le but du procédé de partage d'apprentissage décrit est de transférer le comportement $g_c$ sur une machine secondaire 20, tout en maintenant le calcul de $g_c$ sur la machine primaire 10. Ceci est réalisé sans déplacer, vers la machine secondaire 20, l'apprentissage $x1$ de $g_c$, c'est-à-dire la séquence d'actions $x1$ sur la machine primaire 10, ayant servi à définir cette fonction de comportement $g_c$.

L'art antérieur ne cite aucun procédé de partage partiel d'application, dans lequel chaque utilisateur de l'application partagée ne voit que le résultat de ses propres stimulations et non celui des autres utilisateurs. Au contraire, dans l'art antérieur, tous les utilisateurs partagent la même application, au sens de la création d'un document collaboratif dont tous les acteurs suivent un même affichage commun.

Le problème sous-jacent de partage des effets d'une zone limitée d'une application, sans partager l'application complète ou son affichage sur la machine primaire, n'est en fait jamais évoqué dans l'art antérieur.

Dans des procédés de partage d'application de l'art antérieur, et par exemple de prise de contrôle de machine à distance, une action sur la machine secondaire entraine une modification de l'affichage sur la machine primaire. Au contraire, dans le présent procédé, une action sur la machine secondaire, par exemple une modification de paramètres lors d'un partage partiel d'une feuille de tableur, ne modifie en rien l'affichage des données sur la machine primaire, mais seulement sur l'écran de la machine secondaire. Ce procédé est donc tout à fait différent d'un partage de session, de type collaboratif, dans lequel chaque participant voit toutes les modifications effectuées par l'un quelconque d'entre eux.

Dans un procédé de partage d'application traditionnel, il n'y a pas de différence de nature entre les utilisateurs des machines primaire et secondaire.

Au contraire, ici, il s'agit uniquement d'un partage fonctionnel, et seul le reflet interactif est mis à jour, l'utilisateur secondaire n'ayant accès qu'à la fonction de comportement locale sur la machine primaire, et non à son affichage sur l'écran de la machine primaire. Chaque utilisateur secondaire peut effectuer des calculs sur sa machine en utilisant la même fonction de comportement, sans que les autres utilisateurs connaissent ces calculs. Dans le présent procédé, on transmet un pointeur vers une fonction. Les actions exécutées par l'utilisateur sur la machine secondaire ne touchent pas l'application initiale.

Dans les procédés de partage de l'art antérieur, dans une disposition à une machine primaire et deux machines secondaires, des situations de conflits entre instructions des utilisateurs étaient possibles. Les conflits étaient alors gérés par détermination d'une circulation des droits d'écriture entre les utilisateurs (par exemple de type à jeton circulant).

Dans le présent procédé, il n'existe pas de situation de tels conflits, des instructions contradictoires pouvant être exécutées par divers utilisateurs simultanément, chacune n'impactant que l'affichage de sa machine.

En d'autres termes, un but de l'invention est de permettre un partage à distance indépendant, d'une partie fonctionnelle d'une application sans modifier son apparence ultérieure sur la machine primaire, lors de ses usages sur la machine secondaire.

Les reflets sur les machines primaire et secondaire sont indépendants.

### Variantes de réalisation

La portée de la présente invention ne se limite pas aux détails des formes de réalisation ci-dessus considérées à titre d'exemple, mais s'étend au contraire aux modifications à la portée de l'homme de l'art.

Ce procédé de partage d'apprentissage est applicable à tout type d'application logicielle fonctionnant sur les principes de région interactive, ce qui est le cas de l'ensemble des applications interactives connues des inventeurs.

### Procédé secondaire : administration de la séquence d'apprentissage

Comme un des buts du procédé est de conserver la localité de l'apprentissage, cet apprentissage reste confiné sur la machine primaire.

Néanmoins, pour des raisons de performance ou de sureté de fonctionnement, il peut être souhaitable de déplacer cet apprentissage.

Une application compatible avec le procédé peut donc aussi offrir une interface vers une application capable de réaliser l'administration de l'apprentissage.

Le détail des techniques impliquées dans la réalisation effective de ce procédé secondaire sort du cadre de la présente invention.

### Procédé secondaire : comportement sans effet hors contexte

Si l'implémentation du procédé est techniquement réalisable sur toute application fonctionnant à base de régions interactives - soit la quasi-totalité des applications actuelles connues des inventeurs - cette implémentation n'est pas toujours pertinente pour des raisons inhérentes à la structure de l'application.

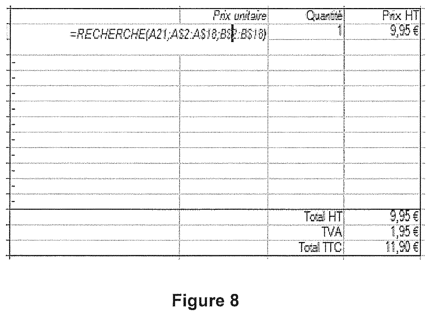

Dans notre cas d'utilisation - un feuillet de tableur permettant d'établir un devis pour un marchand de cycles, un double-clic sur une cellule de la deuxième colonne donne un comportement hors de contexte, comme illustré par la figure 8. Par "hors de contexte", on entend que l'équation « =RECHERCHE(A21;A\$2:A\$18;B\$2:B\$18) » donne des références ne signifiant rien dans le contexte du reflet pour le détenteur de ce reflet, ici l'utilisateur secondaire 21.

Le procédé secondaire décrit ici consiste en la présentation d'une fonction déterministe capable d'apprentissage *M* permettant d'utiliser le procédé de partage d'apprentissage objet de la présente demande, sans comportement **hors de contexte.** Cette fonction M repose sur une utilisation du glisser-déposer pour réaliser les calculs.

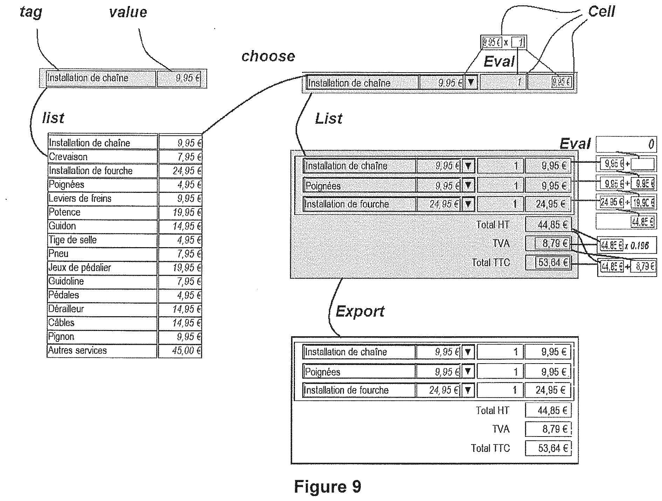

La figure 9 détaille un apprentissage (séquence d'actions *x1* sur la machine primaire 10) confié à *M,* qui mène à une fonction de comportement comparable à celle obtenue à l'issu de l'apprentissage confié à *T,* dont le résultat final est donné figure 3 : un devis de service pour un détaillant de cycles.

La séquence d'opérations *x1* illustrée par la figure 9 comporte, dans l'ordre suivant :

1. Dépôt et édition d'un **tag** servant de « *description* »
2. Dépôt et édition d'une **valeur** servant de « *prix unitaire* »
3. **Clip** de la paire « *description* »/« *prix unitaire* »

4. Création et édition d'une **liste** de reflets du clip « *description »/« prix unitaire* »

5. Dépôt d'un **choix** prenant ses valeurs dans la liste de reflets du clip *« description »/« prix unitaire »*

6. Dépôt d'une valeur servant de « *quantité* »

7. Dépôt d'une valeur servant de « *prix hors-taxe* »

8. Dépôt d'une valeur servant d'« *équation* »

9. Dépôt sur la valeur servant d'« *équation* » de la valeur servant de *« prix unitaire »* dans le choix : opération **évaluant** la valeur servant de *« prix unitaire »* et disposant le résultat dans la valeur servant d'« *équation* ».

10. Dépôt sur la valeur servant d'« *équation* » du signe « * »

11. Dépôt sur la valeur servant d'« *équation* » de la valeur servant de *« quantité* » : opération **évaluant** la valeur servant de « *quantité* » et disposant le résultat dans la valeur servant d'« *équation* ».

12. Dépôt sur la valeur servant d'« *équation* » de la valeur servant de *« prix hors-taxe »* opération **évaluant** la valeur servant de d'« *équation* » et disposant le résultat dans la valeur servant de « prix hors-taxe ».

13. **Clip** du choix « *description »/« prix unitaire* » et des valeurs servant de « *quantité* » et de « *prix hors-taxe* » : ce clip sert de « *ligne de devis* ».

14. Création et édition d'une **liste** de reflets du clip « *ligne de devis* ».

15. Dépôt de la première **valeur** servant de « *prix hors-taxe* » sur le fond : opération créant une liste de valeur servant de « *somme partielle* » contenant une évaluation de chaque valeur servant de « *prix hors-taxe* ».

16. Dépôt sur la première valeur servant de « *somme partielle* » du signe « + »

17. Dépôt sur la seconde valeur servant de « *somme partielle* » de la première valeur servant de « *somme partielle* » : opération créant les éléments suivants,

- une liste de valeur servant de « *somme partielle* » contenant une évaluation de chaque valeur servant de « *prix hors-taxe* » ajoutée à la « *somme partielle* » précédente.
- Une première valeur initialisée à 0
- Une dernière valeur contenant l'évaluation de la « *somme totale* »

18. Dépôt d'une valeur servant de « *prix total hors-taxe* »

19. Dépôt d'une valeur servant de « *formule de la valeur ajoutée* »

20. Dépôt d'une valeur servant de « *taxe sur la valeur ajoutée* »

21. Dépôt d'une valeur servant de « *formule du prix final* »

22. Dépôt d'une valeur servant de « *prix total toutes taxes comprises* »

23. Dépôt sur la valeur servant de « *prix total hors-taxe* » de la valeur servant de « *somme totale* ».

24. Dépôt sur la valeur servant de «*formule de la valeur ajoutée* » de la valeur servant de « *prix total hors-taxe* ».

25. Dépôt sur la valeur servant de « *formule de la valeur ajoutée* » des signes « * », « 0 », « , », « 1 », « 9 », « 6 ».

26. Dépôt sur la valeur servant de «*taxe sur la valeur ajoutée* » de la valeur servant de « *formule de la valeur ajoutée* ».

27. Dépôt sur la valeur servant de « *formule du prix final* » de la valeur servant de « *prix total hors-taxe* ».

28. Dépôt sur la valeur servant de « *formule du prix final* » du signe « + ».

29. Dépôt sur la valeur servant de « *formule du prix final* » de la valeur servant de « *taxe sur la valeur ajoutée* ».

30. Dépôt sur la valeur servant de « *prix total toutes taxes comprises* » de la valeur servant de « *formule du prix final* ».

Les étapes précédentes numérotées de 1 à 30 détaillent une façon de faire des calculs qui se passe de références comme celles apparaissant sur la figure 8 sous forme d'adresses « =RECHERCHE(A21;A$2:A$18;B$2:B$18) ».

Ces références alphanumériques servant de variables sont remplacées dans cette mise en oeuvre préférée pour l'étape 100 par des localisations graphiques sur le domaine d'action C de la région interactive. Ces références existent dans la description textuelle, donnée ci-dessus, de l'activité représentée dans la figure 9 (« *prix hors-taxe* » est une telle référence), mais c'est un effet secondaire de la description sous forme de texte, la nécessité d'identifier les localisations graphiques. L'absence de ces références dans le procédé secondaire *M1*, tel qu'il se déroule dans la réalité opérationnelle de l'utilisateur primaire 10 et détaillé de façon graphique en figure 9, garantit de façon structurelle et décisive l'absence de comportement **hors contexte** lors de l'usage du procédé de partage d'apprentissage partiel décrit dans la présente demande. Usage qui se trouve décrit ci-dessous :

- Clip de la liste de « ligne de devis » et des valeurs servant de *« prix total hors-taxe* », de « *taxe sur la valeur ajoutée* » et de *« prix total toutes taxes comprises » : ce clip sert de « devis »*
- Exportation du clip servant de « *devis »* sur un support d'échange

Le détail des techniques impliquées dans la réalisation effective de ce procédé secondaire sort du cadre de la présente invention.

## Revendications

1.  Procédé de partage, par une machine dite secondaire (20), d'une application prédéterminée, ladite application étant du type à régions interactives au sens du W3C, ladite application étant exécutée sur une machine dite primaire (10), à laquelle la machine secondaire (20) est reliée par un réseau physique de communication (16) qui comporte les étapes suivantes :

    100 - apprentissage par l'utilisateur primaire (11) d'un comportement au sein de l'application considérée, étape dans laquelle une fonction de comportement locale $g_c$ sur la machine primaire (10) est définie par la réaction à une séquence d'actions quelconque *x1* dont les éléments sont réalisés à l'intérieur d'une région interactive de l'application, cette séquence d'actions x1 menant au comportement $g_c$ étant appelée apprentissage du comportement $g_c$,

    200 - définition par un utilisateur (11) de la machine primaire (10) d'un domaine d'action C à partager, ledit domaine d'action C étant créé au sein de la région interactive et ne couvrant pas l'ensemble de ladite région interactive, cette action définissant le comportement $g_c$ pouvant être échangé,

    300 - exportation par l'utilisateur primaire (11) du domaine d'action C à partager de la machine primaire (10) vers au moins une machine secondaire (20),

    400 - reproduction sur une machine secondaire (20) d'un reflet interactif $R_{2C}$ du domaine d'action *C*, ledit reflet interactif $R_{2C}$ présentant un comportement identique à celui du domaine d'action *C* défini et exporté, c'est-à-dire que des entrées identiques dans ce domaine d'action *C,* dites stimulations, produisent des résultats identiques, **caractérisé en ce que**, cette reproduction étant telle que, si plusieurs utilisateurs secondaires (21, 31, 41) travaillent simultanément sur des reflets $R_{2C}$, $R_{3C}$, $R_{4C}$, la machine primaire (10) calcule le résultat de la fonction de comportement $g_c$ appliquée à ces actions *y2, y3, y4* et renvoie à chaque machine secondaire (20, 30, 40) les primitives graphiques résultantes sur le reflet $R_{2C}$, $R_{3C}$, $R_{4C}$ présent sur ces machines secondaires (20, 30, 40), ces reflets $R_{2C}$, $R_{3C}$, $R_{4C}$ étant ainsi indépendants et éventuellement différents les uns des autres, chaque utilisateur de l'application partagée ne voyant que le résultat de ses propres stimulations et non celui des autres utilisateurs.

2.  Procédé selon la revendication 1, **caractérisé en ce que**, dans l'étape 200, l'utilisateur primaire (11) définit visuellement, sur un interface de type écran (12), représentant dans une région interactive des données telles que calculées par l'application logicielle en cours d'exécution sur la machine primaire (10), des frontières fermées définissant un domaine d'action *C* du procédé, au sein de la région interactive de l'application logicielle considérée.

3.  Procédé selon la revendication 2, **caractérisé en ce que** le domaine d'action C est défini par les primitives graphiques de présentation des données sur l'écran de visualisation (12) pour former une région interactive.

4.  Procédé selon l'une quelconque des revendications précédentes, **caractérisé en ce que**, dans l'étape 300, l'exportation du comportement $g_c$ est commandée par l'utilisateur primaire (11) :

    - en cliquant sur le domaine d'action C pour le sélectionner, le fait de cliquer, à l'aide d'une interface de type souris (14), sur un domaine d'action *C* préalablement défini, ayant pour résultat le placement de l'adresse du comportement $g_c$ dans le registre de ladite souris (14),

    - en glissant à l'aide de la souris (14) ce domaine d'action C hors de l'application logicielle considérée, pour le déposer dans un message envoyé à un utilisateur secondaire (21) travaillant sur une machine secondaire (20), ceci ayant pour résultat le transfert de l'adresse du comportement $g_c$ sur le support d'échange (15).

5.  Procédé selon la revendication 4, **caractérisé en ce que**, lorsque l'adresse du comportement $g_c$ a été transmise sur le réseau d'échange (15), elle est récupérée par l'utilisateur secondaire (21) dans le registre d'une souris (24) de la machine secondaire (20), puis déposée par l'utilisateur secondaire (21) sur une application logicielle exécutée sur la machine secondaire (20).

6.  Procédé selon l'une quelconque des revendications précédentes, **caractérisé en ce que**, dans l'étape 400, la reproduction d'un reflet interactif $R_{2C}$ comporte, pour toute stimulation *y2* du reflet interactif $R_{2C}$ d'un domaine d'action *C* par un utilisateur (21) d'une machine secondaire (20), des sous-étapes suivantes :

    401. transfert, par le réseau de communication (15), sur la machine primaire (10) de la stimulation *y2* du reflet interactif $R_{2C}$, ladite stimulation étant réalisée sur la machine secondaire (20),

    402. calcul par l'application sur la machine primaire (10), de la réponse à la stimulation *y2* du reflet interactif

$R_{2C}$, dite réponse secondaire, c'est à dire que le calcul de la fonction de comportement du reflet $R_C$ du domaine d'action $C$ est réalisé sur la machine primaire (10),

403. transfert vers la machine secondaire (20) de la réponse secondaire,

404. mise à jour du reflet interactif $R_{2C}$ sur la machine secondaire (20).

**7.** Procédé selon la revendication 6, **caractérisé en ce que**, dans la sous-étape 402, la réponse secondaire est définie par les primitives graphiques modifiant la visualisation du reflet interactif $R_{2C}$ du domaine d'action $C$.

**8.** Procédé selon l'une quelconque des revendications précédentes, **caractérisé en ce que**, dans l'étape 100, l'apprentissage est transmis à la machine primaire sans références alphanumériques servant de variable de manière à garantir l'absence dans le reflet interactif secondaires de telles références prenant leur sens dans le contexte primaire.

**Patentansprüche**

**1.** Verfahren zur gemeinsamen Nutzung, durch eine sogenannte sekundäre Maschine (20), einer vorbestimmten Anwendung, wobei die Anwendung vom Typ mit interaktiven Bereichen im Sinne des W3C ist, wobei die Anwendung auf einer sogenannten primären Maschine (10) ausgeführt wird, mit welcher die sekundäre Maschine (20) durch ein physisches Kommunikationsnetz (16) verbunden ist, welches die folgenden Schritte umfasst:

100 - Lernen, durch den primären Benutzer (11), eines Verhaltens innerhalb der betrachteten Anwendung, wobei in diesem Schritt eine lokale Verhaltensfunktion $g_c$ auf der primären Maschine (10) durch die Reaktion auf eine beliebige Folge von Aktionen x1 definiert wird, deren Elemente innerhalb eines interaktiven Bereichs der Anwendung realisiert sind, wobei diese Folge von Aktionen x1, die zu dem Verhalten $g_c$ führt, Lernen des Verhaltens $g_c$ genannt wird,

200 - Definition, durch einen Benutzer (11) der primären Maschine (10), eines gemeinsam zu nutzenden Aktionsbereichs $C$, wobei dieser Aktionsbereich $C$ innerhalb des interaktiven Bereichs erzeugt wird und nicht den gesamten interaktiven Bereich abdeckt, wobei diese Aktion das Verhalten $g_c$ definiert, das ausgetauscht werden kann,

300 - Export, durch den primären Benutzer (11), des gemeinsam zu nutzenden Aktionsbereichs $C$ der primären Maschine (10) zu wenigstens einer sekundären Maschine (20),

400 - Reproduktion, auf einer sekundären Maschine (20), eines interaktiven Spiegelbildes $R_{2C}$ des Aktionsbereichs $C$, wobei das interaktive Spiegelbild $R_{2C}$ ein Verhalten aufweist, das mit demjenigen des definierten und exportierten Aktionsbereichs $C$ identisch ist, das heißt, dass identische Eingaben in diesem Aktionsbereich $C$, Stimulationen genannt, identische Ergebnisse bewirken,

**dadurch gekennzeichnet, dass** diese Reproduktion derart beschaffen ist, dass, falls mehrere sekundäre Benutzer (21, 31, 41) gleichzeitig an Spiegelbildern $R_{2C}$, $R_{3C}$, $R_{4C}$ arbeiten, die primäre Maschine (10) das Ergebnis der auf diese Aktionen y2, y3, y4 angewendeten Verhaltensfunktion berechnet und an jede sekundäre Maschine (20, 30, 40) die resultierenden graphischen Primitive auf dem auf diesen sekundären Maschinen (20, 30, 40) vorhandenen Spiegelbild $R_{2C}$, $R_{3C}$, $R_{4C}$ zurücksendet, wobei diese Spiegelbilder $R_{2C}$, $R_{3C}$, $R_{4C}$ somit voneinander unabhängig und eventuell verschieden sind, wobei jeder Benutzer der gemeinsam genutzten Anwendung nur das Ergebnis seiner eigenen Stimulationen und nicht dasjenige der anderen Benutzer sieht.

**2.** Verfahren nach Anspruch 1, **dadurch gekennzeichnet, dass** in Schritt 200 der primäre Benutzer (11) auf einer Schnittstelle vom Typ eines Bildschirms (12), welche in einem interaktiven Bereich solche Daten darstellt, wie sie durch die Softwareanwendung, die gerade auf der primären Maschine (10) ausgeführt wird, berechnet werden, visuell geschlossene Grenzen definiert, die einen Aktionsbereich $C$ des Verfahrens innerhalb des interaktiven Bereichs der betrachteten Softwareanwendung definieren.

**3.** Verfahren nach Anspruch 2, **dadurch gekennzeichnet, dass** der Aktionsbereich $C$ durch die graphischen Darstellungsprimitive der Daten auf dem Visualisierungsbildschirm (12) zum Bilden eines interaktiven Bereichs definiert wird.

**4.** Verfahren nach einem der vorhergehenden Ansprüche, **dadurch gekennzeichnet, dass** in Schritt 300 der Export des Verhaltens $g_c$ durch den primären Benutzer (11) gesteuert wird:

- durch Klicken auf den Aktionsbereich $C$, um ihn auszuwählen, wobei die Tatsache des Klickens, mithilfe einer Schnittstelle vom Typ einer Maus (14), auf einen zuvor definierten Aktionsbereich $C$ die Aufnahme der Adresse des Verhaltens $g_c$ in das Register dieser Maus (14) zum Ergebnis hat,

- durch Verschieben, mithilfe der Maus (14), dieses Aktionsbereichs $C$ aus der betrachteten Softwareanwendung hinaus, um ihn in einer Nachricht abzulegen, die an einen an einer sekundären Maschine (20) arbeitenden sekundären Benutzer (21) gesendet wird, wobei dies die Übertragung der Adresse des Verhaltens $g_c$ auf dem Austauschmedium (15) zum Ergebnis hat.

5. Verfahren nach Anspruch 4, **dadurch gekennzeichnet, dass**, wenn die Adresse des Verhaltens $g_c$ auf dem Austauschnetz (15) übertragen worden ist, sie von dem sekundären Benutzer (21) im Register einer Maus (24) der sekundären Maschine (20) wiedergewonnen wird und anschließend von dem sekundären Benutzer (21) auf einer auf der sekundären Maschine (20) ausgeführten Softwareanwendung abgelegt wird.

6. Verfahren nach einem der vorhergehenden Ansprüche, **dadurch gekennzeichnet, dass** in Schritt 400 die Reproduktion eines interaktiven Spiegelbildes $R_{2C}$ für jede Stimulation $y2$ des interaktiven Spiegelbildes $R_{2C}$ eines Aktionsbereichs $C$ durch einen Benutzer (21) der sekundären Maschine (20) folgende Teilschritte umfasst:

401. Übertragung, durch das Kommunikationsnetz (15), der Stimulation $y2$ des interaktiven Spiegelbildes $R_{2C}$ zu der primären Maschine (10), wobei die Stimulation auf der sekundären Maschine (20) durchgeführt wird,
402. Berechnung, durch die Anwendung auf der primären Maschine (10), der Antwort auf die Stimulation $y2$ des interaktiven Spiegelbildes $R_{2C}$, sekundäre Antwort genannt, das heißt, dass die Berechnung der Verhaltensfunktion des Spiegelbildes $R_C$ des Aktionsbereichs $C$ auf der primären Maschine (10) durchgeführt wird,
403. Übertragung der sekundären Antwort zu der sekundären Maschine (20),
404. Aktualisierung des interaktiven Spiegelbildes $R_{2C}$ auf der sekundären Maschine (20).

7. Verfahren nach Anspruch 6, **dadurch gekennzeichnet, dass** im Teilschritt 402 die sekundäre Antwort durch die graphischen Primitive definiert wird, welche die Visualisierung des interaktiven Spiegelbildes $R_{2C}$ des Aktionsbereichs $C$ modifizieren.

8. Verfahren nach einem der vorhergehenden Ansprüche, **dadurch gekennzeichnet, dass** in Schritt 100 das Lernen zu der primären Maschine ohne als Variable dienende alphanumerische Referenzen übertragen wird, um das Nichtvorhandensein solcher Referenzen, die ihren Sinn im primären Kontext ergeben, im sekundären interaktiven Spiegelbild zu garantieren.

**Claims**

1. Method for sharing, by a so-called secondary machine (20), a predetermined application, said application being of the type with interactive regions in the W3C sense, said application being run on a so-called primary machine (10), to which the secondary machine (20) is linked by a physical communication network (16) which comprises the following steps:

100 - learning by the primary user (11) of a behaviour in the application considered, step in which a function of local behaviour $g_c$ on the primary machine (10) is defined by the reaction to any sequence of actions $x1$ of which the elements are performed within an interactive region of the application, this sequence of actions $x1$ leading to the behaviour $g_c$ being called learning the behaviour $g_c$,
200 - definition by a user (11) of the primary machine (10) of an action domain $C$ to be shared, said action domain $C$ being created in the interactive region and not covering all of said interactive region, this action defining the behaviour $g_c$ being able to be exchanged,
300 - exporting by the primary user (11) of the action domain $C$ *to be shared,* from the primary machine (10) to at least one secondary machine (20),
400 - reproduction on a secondary machine (20) of an interactive reflection $R_{2C}$ of the action domain $C$, said interactive reflection $R_{2C}$ representing a behaviour identical to that of the action domain $C$ defined and exported, that is to say that identical inputs in this action domain $C$, called stimulations, produce identical results,

**characterized in that**,
this reproduction being such that, if several secondary users (21, 31, 41) work simultaneously on the reflections $R_{2C}$, $R_{3C}$, $R_{4C}$, the primary machine (10) calculates the result of the behaviour function $g_c$ applied to these actions $y2, y3, y4$ and returns to each secondary machine (20, 30, 40) the resulting graphic primitives on the reflection $R_{2C}$,

$R_{3C}$, $R_{4C}$ present on these secondary machines (20, 30, 40), these reflections $R_{2C}$, $R_{3C}$, $R_{4C}$ being thus independent and possibly different from one another, each user of the shared application seeing only the result of his or her own stimulations and not that of the other users.

2.  Method according to Claim 1, **characterized in that**, in the step 200, the primary user (11) defines visually, on a screen-type interface (12), representing in an interactive region data as calculated by the software application currently running on the primary machine (10), closed boundaries defining an action domain $C$ of the method, within the interactive region of the software application concerned.

3.  Method according to Claim 2, **characterized in that** the action domain $C$ is defined by the graphic primitives of presentation of data on the display screen (12) to form an interactive region.

4.  Method according to any one of the preceding claims, **characterized in that**, in the step 300, the exporting of the behaviour $g_c$ is ordered by the primary user (11):

    - by clicking on the action domain $C$ to select it, the act of clicking, using a mouse-type interface (14), on a previously defined action domain $C$ having the result of placing the address of the behaviour $g_c$ in the register of said mouse (14),
    - by dragging, using the mouse (14), this action domain $C$ out of the software application concerned, to drop it in a message sent to a secondary user (21) working on a secondary machine (20), this having the result of transferring the address of the behaviour $g_c$ over the exchange medium (15).

5.  Method according to Claim 4, **characterized in that**, when the address of the behaviour $g_C$ has been transmitted over the exchange network (15), it is recovered by the secondary user (21) in the register of a mouse (24) of the secondary machine (20), then dropped by the secondary user (21) on a software application running on the secondary machine (20).

6.  Method according to any one of the preceding claims, **characterized in that** in the step 400, the reproduction of an interactive reflection $R_{2C}$ comprises, for any stimulation $y2$ of the interactive reflection $R_{2C}$ of an action domain $C$ by a user (21) of a secondary machine (20), the following substeps:

    401 transfer, by the communication network (15), to the primary machine (10), of the stimulation $y2$ of the interactive reflection $R_{2C}$, said stimulation being performed on the secondary machine (20),
    402 calculation, by the application on the primary machine (10), of the response to the stimulation $y2$ of the interactive reflection $R_{2C}$, called secondary response, that is to say that the calculation of the behaviour function of the reflection $R_c$ of the action domain $C$ is performed on the primary machine (10),
    403 transfer to the secondary machine (20) of the secondary response,
    404 updating of the interactive reflection $R_{2C}$ on the secondary machine (20).

7.  Method according to Claim 6, **characterized in that**, in the substep 402, the secondary response is defined by the graphic primitives modifying the display of the interactive reflection $R_{2C}$ of the action domain $C$.

8.  Method according to any one of the preceding claims, **characterized in that**, in the step 100, the learning is transmitted to the primary machine without alphanumeric references serving as variable so as to guarantee the absence in the secondary interactive reflection of such references taking their meaning from the primary context.

**Fig. 1**

**Fig. 2**

| | A | B | C | D |
|---|---|---|---|---|
| 1 | | *Prix unitaire* | *Quantité* | |
| 2 | - | | | |
| 3 | Installation de chaîne | 9,95 € | | |
| 4 | Crevaison | 7,95 € | | |
| 5 | Installation de fourche | 24,95 € | | |
| 6 | Poignées | 4,95 € | *les deux* | |
| 7 | Leviers de freins | 9,95 € | *les deux* | |
| 8 | Potence | 19,95 € | | |
| 9 | Guidon | 14,95 € | | |
| 10 | Tige de selle | 4,95 € | | |
| 11 | Pneu | 7,95 € | *par pneu* | |
| 12 | Jeux de pédalier | 19,95 € | | |
| 13 | Guidoline | 7,95 € | | |
| 14 | Pédales | 4,95 € | *les deux* | |
| 15 | Dérailleur | 14,95 € | | |
| 16 | Câbles | 14,95 € | *câbles compris* | |
| 17 | Pignon | 9,95 € | | |
| 18 | Autres services | 45,00 € | *tarif horaire* | |
| 19 | | | | |
| 20 | | *Prix unitaire* | *Quantité* | *Prix HT* |
| 21 | - | | | |
| 22 | - | | | |
| 23 | - | | | |
| 24 | - | | | |
| 25 | - | | | |
| 26 | - | | | |
| 27 | - | | | |
| 28 | - | | | |
| 29 | - | | | |
| 30 | - | | | |
| 31 | - | | | |
| 32 | - | | | |
| 33 | | | Total HT | |
| 34 | | | TVA | |
| 35 | | | Total TTC | |

**Figure 3**

$$T \ (ref; \ Clip(Devis)) =$$

| | A | B | C | D |
|---|---|---|---|---|
| 1 | | *Prix unitaire* | *Quantité* | |
| 2 | - | | | |
| 3 | Installation de chaîne | 9,95 € | | |
| 4 | Crevaison | 7,95 € | | |
| 5 | Installation de fourche | 24,95 € | | |
| 6 | Poignées | 4,95 € | *les deux* | |
| 7 | Leviers de freins | 9,95 € | *les deux* | |
| 8 | Potence | 19,95 € | | |
| 9 | Guidon | 14,95 € | | |
| 10 | Tige de selle | 4,95 € | | |
| 11 | Pneu | 7,95 € | *par pneu* | |
| 12 | Jeux de pédalier | 19,95 € | | |
| 13 | Guidoline | 7,95 € | | |
| 14 | Pédales | 4,95 € | *les deux* | |
| 15 | Dérailleur | 14,95 € | | |
| 16 | Câbles | 14,95 € | *câbles compris* | |
| 17 | Pignon | 9,95 € | | |
| 18 | Autres services | 45,00 € | *tarif horaire* | |
| 19 | | | | |
| 20 | | *Prix unitaire* | *Quantité* | *Prix HT* |
| 21 | - | | | |
| 22 | - | | | |
| 23 | - | | | |
| 24 | - | | | |
| 25 | - | | | |
| 26 | - | | | |
| 27 | - | | | |
| 28 | - | | | |
| 29 | - | | | |
| 30 | - | | | |
| 31 | - | | | |
| 32 | - | | | |
| 33 | | | Total HT | |
| 34 | | | TVA | |
| 35 | | | Total TTC | |

**Figure 4**

Figure 5

**1. Glisser déposer le clip produit l'adresse**

**2. Utilisation d'un support d'échange**

**3. Glisser-déposer l'adresse produit le reflet**

Applications compatibles avec le procédé décrit

Figure 6

EP 2 649 769 B1

Application
primaire

Application
secondaire

Cf. Figure 4

$[y]_C$

Cf. Figure 3

$[T(ref;clip(C);[y]_C)]_C$

*ibid*

*ibid*

Figure 7

19

| | Prix unitaire | Quantité | Prix HT |
|---|---|---|---|
| =RECHERCHE(A21;A$2:A$18;B$2:B$18) | | 1 | 9,95 € |
| | | | |
| | | | |
| | | | |
| | | | |
| | | | |
| | | | |
| | | | |
| | | | |
| | | | |
| | | Total HT | 9,95 € |
| | | TVA | 1,95 € |
| | | Total TTC | 11,90 € |

**Figure 8**

*tag*     *value*

*choose*                                                        Cell

| 9,95 € | x | 1 |

*Eval*

| Installation de chaîne | 9,95 € | ▼ | | 1 | | 9,95 € |

| Installation de chaîne | 9,95 € |
|---|---|

*list*                                                *List*

| Installation de chaîne | 9,95 € |
|---|---|
| Crevaison | 7,95 € |
| Installation de fourche | 24,95 € |
| Poignées | 4,95 € |
| Leviers de freins | 9,95 € |
| Potence | 19,95 € |
| Guidon | 14,95 € |
| Tige de selle | 4,95 € |
| Pneu | 7,95 € |
| Jeux de pédalier | 19,95 € |
| Guidoline | 7,95 € |
| Pédales | 4,95 € |
| Dérailleur | 14,95 € |
| Câbles | 14,95 € |
| Pignon | 9,95 € |
| Autres services | 45,00 € |

*Eval*  | 0 |

| Installation de chaîne | 9,95 € | ▼ | | 1 | 9,95 € | | 9,95 € + |
| Poignées | 9,95 € | ▼ | | 1 | 9,95 € | | 9,95 € + 9,95 € |
| Installation de fourche | 24,95 € | ▼ | | 1 | 24,95 € | | 24,95 € + 19,90 € |
| | | | Total HT | 44,85 € | | 44,85 € |
| | | | TVA | 8,79 € | | 44,85 € x 0,196 |
| | | | Total TTC | 53,64 € | | 44,85 € + 8,79 € |

*Export*

| Installation de chaîne | 9,95 € | ▼ | | 1 | 9,95 € |
| Poignées | 9,95 € | ▼ | | 1 | 9,95 € |
| Installation de fourche | 24,95 € | ▼ | | 1 | 24,95 € |
| | | | Total HT | 44,85 € |
| | | | TVA | 8,79 € |
| | | | Total TTC | 53,64 € |

## Figure 9

## RÉFÉRENCES CITÉES DANS LA DESCRIPTION

**Documents brevets cités dans la description**

- US 20100257450 A
- US 20070294626 A